# EUROPEAN PATENT SPECIFICATION

(11) **EP 1 792 534 B1**
(45) Date of publication and mention of the grant of the patent: **10.09.2008**
(21) Application number: 06425809.8
(22) Date of filing: 29.11.2006
(51) Int. Cl.: A01G 3/08, A01G 3/053, B27B 17/00

(54) **Coupling, and angular adjustment assembly, particularly for agricultural tools**
Kupplungseinrichtung und Winkeleinstellungseinrichtung, insbesondere für Landwirtschaftswerkzeuge
Dispositif d'accouplement et de réglage angulaire notamment pour les outils agricoles

(30) Priority: 02.12.2005 IT RM20050603
(43) Date of publication of application: 06.06.2007
(73) Proprietor: Castelmani, Franco, 00025 Gerano (RM) (IT)
(72) Inventor: Castelmani, Franco, 00025 Gerano (RM) (IT)
(74) Representative: Iannone, Carlo Luigi

(56) References cited:
- EP-A2- 1 031 402
- US-A- 4 760 646

## Description

The present invention relates to a coupling and angular adjustment assembly, particularly for agricultural tools.

More specifically, the invention relates to an assembly of the above kind, particularly studied and realised for easing variation of angle between a tool and a support in a quick and reliable way.

In the following the specification will be addressed to angular adjustment of a pruner, but it is well evident that the same must not be considered limited to this specific use.

As it is well known, at present specific tools are necessary for tree pruning to be employed in different positions.

Said tools are usually applied at the top of a powered rod or of a generic support.

A technical problem when using the above systems is that of angular adjustment of said tools. In fact, they are usually provided aligned with said support and coupled at its Top, so that, with certain cutting conditions, the user cannot see the point where the tool is positioned for cutting, and particularly where the pruner blade is positioned. It often involves an imprecision of cutting, for example while prune a tall tree.

A technical problem of the known coupling between supports and tools is that when a cut is made, vibrations are transmitted directly along the rod. Therefore, the tool tends to move far away the cutting point and the operator is required to apply a higher pressure when cutting.

EP-A2-1031402 (filed in the name of the same Applicant) describes a "Chain saw branch cutting." Said document specifically describes a tool for cutting branches with diameters up to 200 mm and above, said tool being designed in such a way that if any parts become unloosened, the bracket will not release itself from the bevel gear and the tool will therefore not fall (column 1 - lines 1-11).

The object of the present invention is therefore that of suggesting a device for angular adjustment of a tool with respect to a support, particular for agricultural tools, permitting making adjustment operations very safely and quickly.

Another object of the present invention is that of suggesting a device that must not be used with a particular tool, but can be installed on any kind of agricultural, handicraft, industrial and like tool.

It is therefore specific object of the present invention a coupling and angular adjustment assembly between a first body and a second body, rotably coupled with respect to an axis, characterised in that it comprises an adjustment nut, fixed to said second body; a positioning ring, between said adjustment nut and said second body, said positioning ring having a plurality of notches, obtained substantially along its perimeter; a pin longitudinally slidably inserted within a seat integral with or obtained in said second body, said seat being perpendicular with respect to said positioning ring, said pin being positioned so as to engage in one of said positioning ring notches thus determining the position between said first body and said second body; first means for fixing said positioning ring to said first body; second fixing means that can be loosened, and that when tightened, block said positioning ring and said adjustment nut on said first body, and when loosened permit that said adjustment nut rotating and to said pin to pass from one notch to a different one, maintaining a partial engagement in one of said notches.

Always according to the invention, said nut can comprise a circular cavity, wherein said positioning ring is positioned.

Still according to the invention, said nut can comprise a first and a second curved slots obtained within said circular cavity, within which said first fixing means and said second fixing means are inserted.

Furthermore, according to the invention, said slots can have each an extension of 90° and are specular each other.

Preferably, according to the invention, said notches extend for 90°.

Advantageously, according to the invention, said second fixing means can be comprised of a locking screw partially threaded at its end, said threading coupling with a corresponding inner threading of said positioning ring, said threaded end projecting from said positioning ring and having locking means for preventing the unscrewing of said screw with respect to said positioning ring.

Always according to the invention, said locking means can comprise one or more nuts coupled at the end of said screw and one or more elastic washers provided within said nuts and said adjustment ring along the movement length of said screw and suitable to loosen said assembly.

Still according to the invention, there are two nuts screwed on the end of said threaded screw, and fixed each other by glue and/or resin, in such a position to leave the necessary lash for tightening the screw.

Furthermore, according to the invention, said first fixing means can comprise a screw and a spacer placed between said screw and said nut, so as not to tighten the same.

Advantageously, according to the invention, said assembly can comprise resilient means between said cavity and said pin, such as a spring.

Still according to the invention, said first body can be comprised of a support and said support can comprise a gearbox.

Furthermore, according to the invention, said second body can be comprised of a tool.

Preferably, according to the invention, said tool can be a pruner.

The present invention will be now described, for illustrative but not limitative purposes, according to its preferred embodiments, with particular reference to the figures of the enclosed drawings, wherein:
figure 1 shows a perspective view of a pruner in a first angular position with respect to a support rod;
figure 2 shows a perspective view of the pruner of figure 1 in a second angular position with respect to a support rod;
figure 3 is an exploded section view of the angular adjustment assembly according to the present invention;
figures 4a and 4b are a front and a rear view of an adjustment nut;
figure 5 shows a front view of the positioning ring of the angular adjustment assembly according to the present invention;
figure 6 is a lateral view of the mounting of the angular adjustment assembly according to the present invention;
figure 7 shows a rear view of the adjustment assembly of figure 6; and
figure 8 is a section view of a particular of the angular adjustment assembly of figure 6.

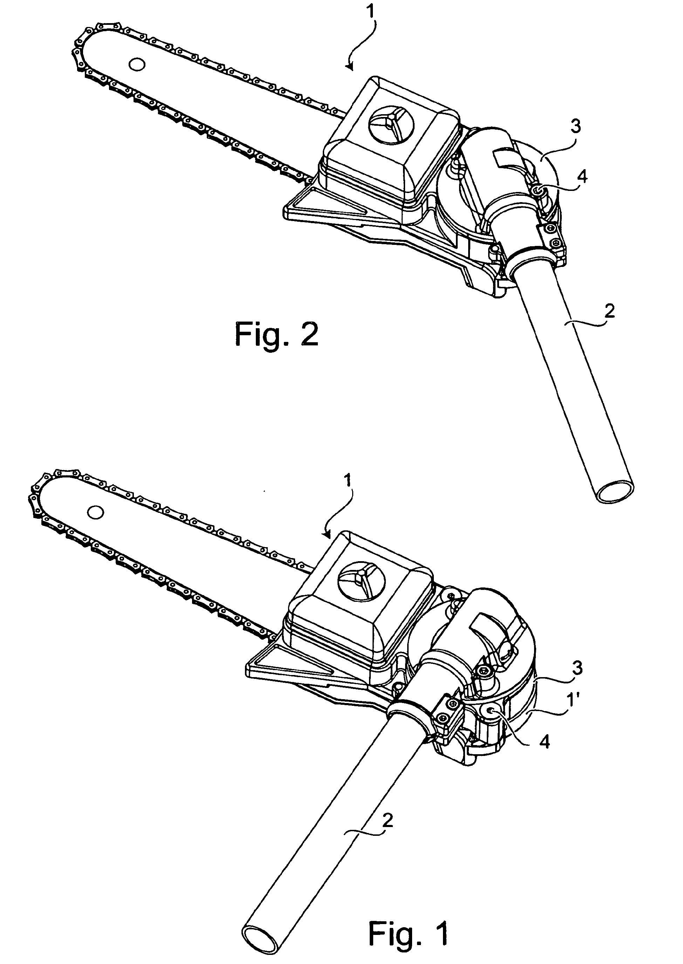

Making reference to figures 1 and 2, it is possible observing a tool 1, particularly a pruner, coupled by a second body 1' to a first body 3, that in this embodiment is a gear box integral with a support 2. in this embodiment, said support 2 is a rod.

Said rod 2 provides inside, along its axis, a motion transmission shaft (not shown in the figures). At the top of said transmission shaft it is provided a bevel gear pair introduced within said gear box 3. It permits transmission of the motion from the transmission shaft to the pruner 1.

A locking screw is provided on said gearbox 3, loosening coupling between the gearbox 3 and said tool 1, permitting their adjustment with different angulations, as shown in the two figures and as it will further explained in the following.

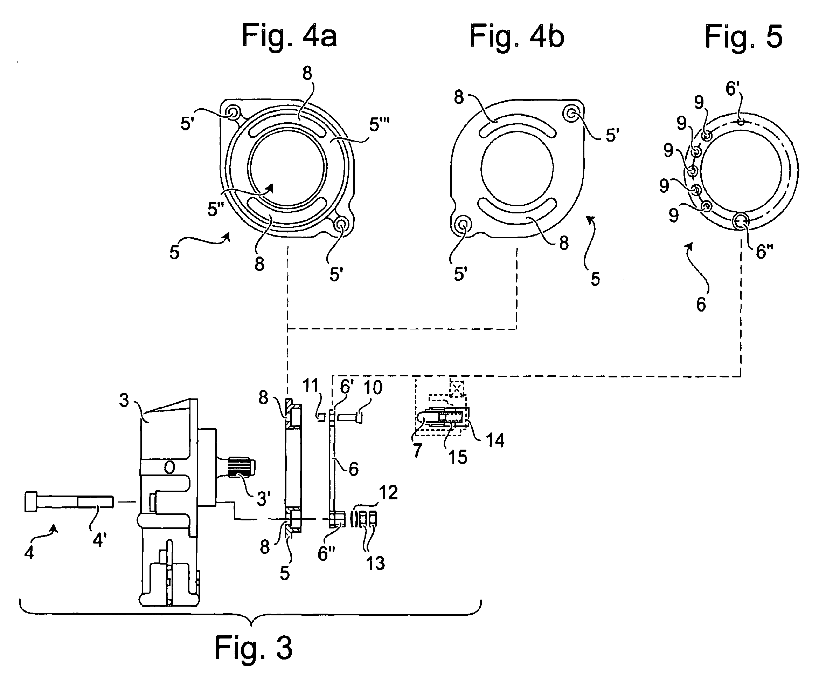

Making now reference to figure 3, it is possible making an analysis of the angular adjustment assembly according to the present invention.

Said assembly mainly provides an adjustment nut 5, a positioning ring 6 and a positioning pin 7.

Figures 4a and 4b specifically show adjustment nut 5, seen from the two different faces.

Said adjustment nut 5 has two holes 5' for fixing the second body 1' (not shown in these figures) of the tool 1 and a central hole 5", wherein the motion transmission shaft 3' is introduced.

Said nut 5 also provides a circular cavity 5"', within which two curved slots 8 are obtained, said slots being symmetrical with respect to said central hole 5" and extending each one for 90°.

Positioning sing 6 is so shaped to be introduced within said circular cavity 5"'.

Furthermore, said positioning ring 6, making reference to figure 5, provides two holes 6' and 6". Hole 6" also provides an inner threading, coupling with the screw 4, said screw being partially threaded in correspondence of its end. Threaded end of said screw 4 projects from said positioning ring 6 and engages with the pair of nuts 13 and one or more elastic washers provided between said nuts 13 and said adjustment nut 6, along the motion run of said screw 3, to loosen said assembly.

Nuts 13 are fixed to said screw 4 by glue and/or resin and/or by the corresponding threading.

Once said positioning ring 6 has been inserted within said cavity 5"', it is fixed to said gearbox 3 by screws 10 and 4, respectively passing through holes 6' and 6". Screw 10 is a simple fixing screw that, before engaging with said gearbox 3, passes through one of said nut 5 slots 8. An anti-locking spacer 11 is provided between the fixing screw 10 and the slot, permitting to the nut 5 not to engage with said screw 10.

Instead, locking screw 4 can be loosen, providing a threading only in its end, not only screwed within the hole threading 6", but, after having passed through the second nut 5 slot 8, it passes through the elastic washers 12, and finally is screwed in nuts 13.

This solution permits limiting rotation excursion of said screw 4 within the inner threading of the ring 6 hole 6", so as it cannot unscrew beyond the permitted excursion of said gearbox 3 and said tool 1.

Pin 7 is inserted within a seat 14 obtained in said body 1' of the tool or pruner 1. said body 1' and said gearbox 3 are placed so as said pin 7 is positioned in correspondence of said notches 9 of the positioning ring. A spring 15 is further provided between said seat 14 and said pin 7.

Taking into consideration the situation where the screw 4 is tighten, it is observed that it also tightens the positioning ring 6, keeping the adjustment nut 5, provided between said ring 6 and said gearbox 3, coupled with the latter.

Since said nut is integral with said body 1', the whole assembly is kept joined.

In order to modify the angle between said gearbox 3 and said tool 1 second body 1', it is sufficient unscrewing said screw 4, e.g. by a socket head screw (not shown in the figures). Nuts 13 will limit excursion of the same screw 4, at least up to sufficiently loosening the assembly. Nut 5, not being any more tightened to said gearbox 3, can rotate, in any case permitting to the operator rotating nut 5 with a reduced force. Said pin 7 permits preventing leaving body 1' and gearbox 3 rotating independently each other.

Therefore, following to a measured stress, operator can rotate adjustment nut 5, forcing displacement of pint 7 from a notch to another one. Nut 5 moves between spacer 11 and not threaded portion of the screw 4, both inserted within the slots 8.

Once individuated the preferred cutting position, it is sufficient tightening again the locking screw 4, tightening the adjustment 5 between the gearbox 3 and the adjustment ring 6.

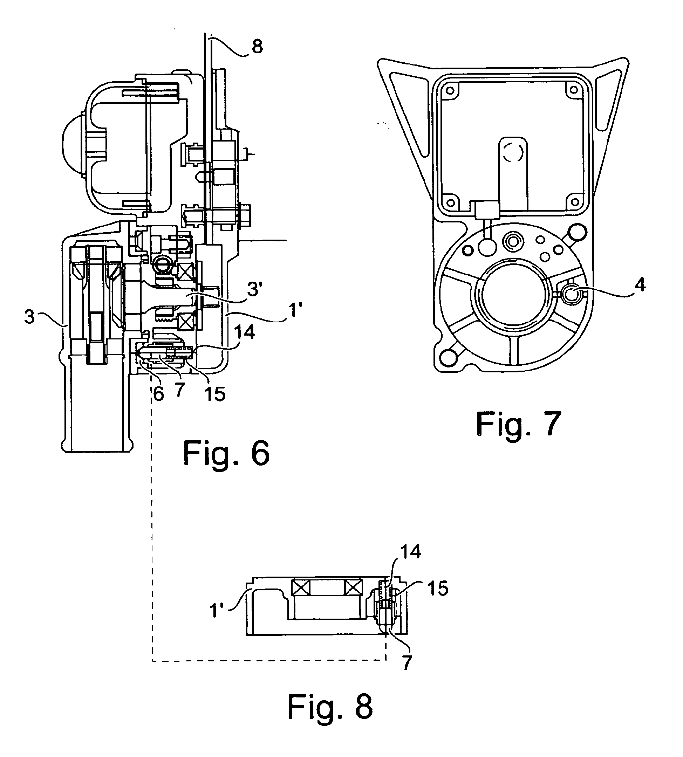

Figures 6 - 8 show a section of coupling between said pruner 1 and said rod 2.

As it can be clearly understood, the angular adjustment assembly is provide between said body 1' and said gearbox 3, pin 7 being inserted within a notch 9.

On the basis of the above specification, it can be noted that main advantage of the present invention is that of permitting an easy adjustment and a safe fixing in a rotable coupling between two bodies without the risk of completely free them.

Another advantage of the present invention is that of permitting a positioning between 0° and 180° between said support and said tool, in order to obtain cutting positioning permitting resting the tool or pruner, e.g. on the branch to be cut, so as to reduce the operator stress and limiting transmission of vibrations.

A further advantage of the present invention is the possibility of using said tool under the working plane in uneven terrain.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Coupling and angular adjustment assembly between a first body (3) and a second body (1'), rotably coupled with respect to an axis, **characterised in that** it comprises an adjustment nut (5), fixed to said second body (1'); a positioning ring (6), between said adjustment nut (5) and said second body (1'), said positioning ring having a plurality of notches (9), obtained substantially along its perimeter; a pin (7) longitudinally slidably inserted within a seat (14) integral with or obtained in said second body (1'), said seat being perpendicular with respect to said positioning ring (6), said pin being positioned so as to engage in one of said positioning ring (6) notches thus determining the position between said first body (3) and said second body (1'); first means (10) for fixing said positioning ring (6) to said first body (1'); second fixing means (4) that can be loosened, and that when tightened, block said positioning ring (6) and said adjustment nut (5) on said first body (3), and when loosened permit that said adjustment nut (5) rotating and to said pin (7) to pass from one notch (9) to a different one, maintaining a partial engagement in one of said notches (9).

2. Assembly according to claim 1, **characterised in that** said nut (5) comprises a circular cavity (5"), wherein said positioning ring (6) is positioned.

3. Assembly according to claim 2, **characterised in that** said nut (5) comprises a first and a second curved slots (8) obtained within said circular cavity (5"), within which said first fixing means (10) and said second fixing means (4) are inserted.

4. Assembly according to claim 3, **characterised in that** said slots (8) have each an extension of 90° and are specular each other.

5. Assembly according to one of the preceding claims; **characterised in that** said notches (9) extend for 90°.

6. Assembly according to one of the preceding claims, **characterised in that** said second fixing means (4) are comprised of a locking screw partially threaded at its end, said threading coupling with a corresponding inner threading of said positioning ring, said threaded end projecting from said positioning ring and having locking means for preventing the unscrewing of said screw with respect two said positioning ring.

7. Assembly according to claim 6, **characterised in that** said locking means comprise one or more nuts coupled at the end of said screw and one or more elastic washers provided within said nuts and said adjustment ring along the movement length of said screw and suitable to loosen said assembly.

8. Assembly according to claim 6 or 7, **characterised in that** there are two nuts (13) screwed on the end of said threaded screw (4), and fixed each other by glue and/or resin, in such a position to leave the necessary lash for tightening the screw (4).

9. Assembly according to one of the preceding claims, **characterised in that** said first fixing means (10) comprise a screw and a spacer (11) placed between said screw and said nut, so as not to tighten the same.

10. Assembly according to one of the preceding claims, **characterised in that** said assembly comprises resilient means between said cavity and said pin.

11. Assembly according to claim 10, **characterised in that** said resilient means comprise a spring.

12. Assembly according to one of the preceding claims, **characterised in that** said first body is comprised of a support.

13. Assembly according to claim 12, **characterised in that** and said support comprises a rod.

14. Assembly according to one of the preceding claims, **characterised in that** said second body is comprised of a tool.

15. Assembly according to claim 14, **characterised in that** said tool is a pruner.

## Patentansprüche

1. Anordnung zur Verbindung und Winkeleinstellung zwischen einem ersten Körper (3) und einem zweiten Körper (1'), die in Bezug auf eine Achse drehbar verbunden sind, **dadurch gekennzeichnet, dass** sie umfasst: eine Einstellungsmutter (5), die an dem zweiten Körper (1') befestigt ist; einen Positionierring (6) zwischen der Einstellungsmutter (5) und dem zweiten Körper (1'), wobei der Positionierring eine Vielzahl von Aussparungen (9) aufweist, die im Wesentlichen entlang seines Umfangs ähnlich sind; einen Stift (7), der in Längsrichtung verschiebbar in einen Sitz (14) eingesetzt ist, der ein Bestandteil des zweiten Körpers (1') oder darin erhältlich ist, wobei der Sitz rechtwinklig zu dem Positionierring (6) angeordnet ist, wobei der Stift so angeordnet ist, dass er in eine der Aussparungen in dem Positionierring (6) eingreift und **dadurch** die Stellung zwischen dem ersten Körper (3) und dem zweiten Körper (1') definiert; ein erstes Mittel (10) zur Befestigung des Positionierrings (6) an dem ersten Körper (1'); ein zweites Befestigungsmittel (4), das gelöst werden kann und das im angezogenen Zustand den Positionierring (6) und die Einstellungsmutter (5) auf dem ersten Körper (3) blockiert und das es im gelösten Zustand erlaubt, dass die Einstellungsmutter (5) sich dreht und der Stift (7) von einer der Aussparungen (9) in eine andere übergeht, wobei ein teilweiser Eingriff in eine der Aussparungen (9) beibehalten wird.

2. Anordnung gemäß Anspruch 1, **dadurch gekennzeichnet, dass** die Mutter (5) einen kreisförmigen Hohlraum (5") aufweist, in welcher der Positionierring (6) positioniert ist.

3. Anordnung gemäß Anspruch 2, **dadurch gekennzeichnet, dass** die Mutter (5) einen ersten und einen zweiten gebogenen Schlitz (8) aufweist, der innerhalb des kreisförmigen Hohlraums (5") erhältlich ist, wobei das erste Befestigungsmittel (10) und das zweite Befestigungsmittel (4) darin eingesetzt sind.

4. Anordnung gemäß Anspruch 3, **dadurch gekennzeichnet, dass** die Schlitze (8) jeweils eine Erstreckung von 90° aufweisen und einander spiegeln.

5. Anordnung gemäß einem der vorangehenden Ansprüche, **dadurch gekennzeichnet, dass** sich die Aussparungen (9) über 90° erstrecken.

6. Anordnung gemäß einem der vorangehenden Ansprüche, **dadurch gekennzeichnet, dass** das zweite Befestigungsmittel (4) aus einer Verriegelungsschraube besteht, die an ihrem Ende teilweise mit einem Gewinde versehen ist, wobei das Gewinde mit einem entsprechenden Innengewinde des Positionierrings verbunden ist, wobei das mit einem Gewinde versehene Ende aus dem Positionierring hervorragt und ein Verriegelungsmittel aufweist, um das Herausschrauben der Schraube in Bezug auf den Positionierring zu verhindern.

7. Anordnung gemäß Anspruch 6, **dadurch gekennzeichnet, dass** das Verriegelungsmittel eine oder mehrere Muttern aufweist, die mit dem Ende der Schraube verbunden ist, sowie eine oder mehrere elastische Unterlegscheiben, die entlang der Bewegungslänge der Schraube in der Mutter und dem Einstellungsring vorgesehen und geeignet ist, um die Anordnung zu lockern.

8. Anordnung gemäß Anspruch 6 oder 7, **dadurch gekennzeichnet, dass** es zwei Muttern (13) gibt, die auf das Ende der mit einem Gewinde versehenen Schraube (4) aufgeschraubt und durch Klebstoff und/oder Harz in einer solchen Position aneinander befestigt sind, um das notwendige Spiel zum Anziehen der Schraube (4) zu lassen.

9. Anordnung gemäß einem der vorangehenden Ansprüche, **dadurch gekennzeichnet, dass** das erste Befestigungsmittel (10) eine Schraube und ein Distanzstück (11) umfasst, das zwischen der Schraube und der Mutter angeordnet ist, um dieselbe nicht anzuziehen.

10. Anordnung gemäß einem der vorangehenden Ansprüche, **dadurch gekennzeichnet, dass** die Anordnung zwischen dem Hohlraum und dem Stift ein elastisches Mittel umfasst.

11. Anordnung gemäß Anspruch 10, **dadurch gekennzeichnet, dass** das nachgiebige Mittel eine Feder aufweist.

12. Anordnung gemäß einem der vorangehenden Ansprüche, **dadurch gekennzeichnet, dass** der erste Körper aus einem Lager besteht.

13. Anordnung gemäß Anspruch 12, **dadurch gekennzeichnet, dass** das Lager einen Stab umfasst.

14. Anordnung gemäß einem der vorangehenden Ansprüche, **dadurch gekennzeichnet, dass** der zweite Körper aus einem Werkzeug besteht.

15. Anordnung gemäß Anspruch 14, **dadurch gekennzeichnet, dass** das Werkzeug ein Trimmer ist.

## Revendications

1. Dispositif de couplage et de réglage angulaire entre un premier corps (3) et un second corps (1'), couplés de manière rotative par rapport à un axe, **caractérisé en ce qu'**il comprend un écrou de réglage (5) fixé audit second corps (1') ; un anneau de positionnement (6), entre ledit écrou de réglage (5) et ledit second corps (1'), ledit anneau de positionnement présentant une pluralité d'entailles (9) obtenues sensiblement le long de son périmètre; une tige (7) insérée longitudinalement de manière coulissante dans une assise (14) formée d'une seule pièce avec ou obtenue dans ledit second corps (1'), ladite assise étant perpendiculaire par rapport audit anneau de positionnement (6), ladite tige étant placée de manière à venir en prise avec l'une desdites entailles de l'anneau de positionnement (6), déterminant ainsi la position entre ledit premier corps (3) et ledit second corps (1') ; le premier moyen (10) destiné à fixer ledit anneau de positionnement (6) audit premier corps (1') ; un second moyen de fixation (4) pouvant être relâché et qui, lorsqu'il est serré, bloque ledit anneau de positionnement (6) et ledit écrou de réglage (5) sur ledit premier corps (3), et lorsqu'il est relâché permet que ledit écrou de réglage (5) tourne et que ladite tige (7) passe d'une entaille (9) à une entaille différente, maintenant un engagement partiel dans une desdites entailles (9).

2. Dispositif selon la revendication 1, **caractérisé en ce que** ledit écrou (5) comprend une cavité circulaire (5"), dans laquelle ledit anneau de positionnement (6) est placé.

3. Dispositif selon la revendication 2, **caractérisé en ce que** ledit écrou (5) comprend une première et une seconde fentes incurvées (8) obtenues dans ladite cavité circulaire (5"), dans lesquelles ledit premier moyen de fixation (10) et ledit second moyen de fixation (4) sont insérés.

4. Dispositif selon la revendication 3, **caractérisé en ce que** lesdites fentes (8) présentent chacune une extension de 90° et sont spéculaires l'une par rapport à l'autre.

5. Dispositif selon l'une des revendications précédentes, **caractérisé en ce que** lesdites fentes (9) s'étendent à 90 °.

6. Dispositif selon l'une des revendications précédentes, **caractérisé en ce que** ledit second moyen de fixation (4) est constitué d'une vis de blocage partiellement filetée au niveau de son extrémité, ledit filetage étant couplé à un filetage intérieur correspondant dudit anneau de positionnement, ladite extrémité filetée faisant saillie à partir dudit anneau de positionnement et comportant un moyen de verrouillage pour empêcher le dévissage de ladite vis par rapport audit anneau de positionnement.

7. Dispositif selon la revendication 6, **caractérisé en ce que** ledit moyen de verrouillage comprend un ou plusieurs écrous couplés au niveau de l'extrémité de ladite vis et une ou plusieurs rondelles élastiques prévues dans lesdits écrous et ledit anneau de réglage le long de la longueur du mouvement de ladite vis et adaptés pour relâcher ledit dispositif.

8. Dispositif selon la revendication 6 ou 7, **caractérisé en ce qu'**il y a deux écrous (13) vissés sur l'extrémité de ladite vis filetée (4), et fixés l'un à l'autre à l'aide de colle et / ou de résine, dans une position permettant de laisser le jeu nécessaire pour serrer la vis (4).

9. Dispositif selon l'une des revendications précédentes, **caractérisé en ce que** ledit premier moyen de fixation (10) comprend une vis et une entretoise (11) placée entre ladite vis et ledit écrou, de manière à ne pas la serrer.

10. Dispositif selon l'une des revendications précédentes, **caractérisé en ce que** ledit dispositif comprend des moyens résilients entre ladite cavité et ladite tige.

11. Dispositif selon la revendication 10, **caractérisé en ce que** lesdits moyens résilients comprennent un ressort.

12. Dispositif selon l'une des revendications précédentes, **caractérisé en ce que** ledit premier corps est constitué d'un support.

13. Dispositif selon la revendication 12, **caractérisé en ce que** ledit support comprend une tige.

14. Dispositif selon l'une des revendications précédentes, **caractérisé en ce que** ledit second corps est constitué d'un outil.

15. Dispositif selon la revendication 14, **caractérisé en ce que** ledit outil est un outil d'élagage.
